# EUROPEAN PATENT APPLICATION

(11) **EP 4 606 629 A1**
(43) Date of publication of application: **27.08.2025**
(21) Application number: 25158983.4
(22) Date of filing: 20.02.2025
(51) Int. Cl.: B60L 50/64, B60L 58/21, H01M 10/42

(54) **SMARTCELL CLUSTER AND BATTERY PACKAGING FOR LOW ELECTROMAGNETIC FIELD EFFECT**

(30) Priority: 21.02.2024 US 202418583145
(71) Applicant: Volvo Car Corporation, 405 31 Göteborg (SE)
(72) Inventor: BJÖRKHOLTZ, Jonas, 40531 Göteborg (SE); FORSSELL, Jonas, 40531 Göteborg (SE)
(74) Representative: Maiwald GmbH

(57) **Abstract**

Various technologies and embodiments are presented to minimize/mitigate electromagnetic field (EMF) effects and electromagnetic interference (EMI) effects generated in a battery module/battery pack when the battery module/battery pack is utilized with alternating current (AC) operation. Respective electrical flowpaths are created throughout a battery module such that EMF/EMI generated in a first portion of a flowpath negates EMF/EMI generated in an adjacent second portion of a flowpath. The battery module operates as a smartcell, wherein battery module comprises a pair of clusterboards located between a first cluster of battery cells and a second cluster of battery cells, wherein the central positioning of the pair of clusterboards functions to isolate the first cluster of battery cells from the second cluster of battery cells.

## Description

### TECHNICAL FIELD

The subject disclosure relates to electric and/or hybrid electric vehicle drive technologies, and more particularly to a battery configuration for minimizing electromagnetic effects when utilizing the battery with alternating current.

### BACKGROUND

While electric vehicles (EV) are becoming commonplace globally, the adoption of such vehicles is partially dependent upon the charging and use of the onboard batteries. A wealth of technical knowledge exists regarding the development/use of onboard batteries in a direct current (DC) situation, while further research is being conducted regarding EV batteries and alternating current (AC) use. Concerns arise regarding generation of electromagnetic fields (EMFs) and resulting electromagnetic interference (EMI) when utilizing a battery in an AC implementation, whereby EMF and EMI effects can deleteriously affect operation of other electronic devices in sufficient proximity of the battery, as well as being regulated with regard to the health of a person in proximity of the battery. Hence, minimizing EMF and EMI can improve EV battery implementation and according adoption of EV's.

### SUMMARY

The following presents a summary to provide a basic understanding of one or more embodiments described herein. This summary is not intended to identify key or critical elements, or delineate any scope of the different embodiments and/or any scope of the claims. The sole purpose of the Summary is to present some concepts in a simplified form as a prelude to the more detailed description presented herein.

In one or more embodiments described herein, systems, devices, methods, processes, apparatus, and suchlike are presented to facilitate reduction of EMF and corresponding EMI present in respective battery modules and battery packs.

In an embodiment, a battery module can comprise a first cluster of battery cells, wherein the first cluster of battery cells are electrically coupled together, a second cluster of battery cells, wherein the second cluster of battery cells are electrically coupled together, and a first clusterboard electrically coupled to the first cluster of battery cells, and a second clusterboard electrically coupled to the second cluster of battery cells, wherein the first clusterboard is co-located with the second clusterboard to form a paired clusterboard, and the paired clusterboard is located between the first cluster of battery cells and the second cluster of battery cells, wherein the battery module is configured to reduce an electromagnetic field (EMF) present in the battery module when electrical energy is flowing through the battery module. In an embodiment, the EMF can be generated when the battery module is utilized with an alternating current (AC) operation.

In an embodiment, the battery module can be located onboard an electric vehicle and configured to provide energy to a motor located on the electric vehicle. Further, the first cluster of battery cells and the second cluster of battery cells can comprise at least one of prismatic batteries or cylindrical batteries.

In an embodiment, the paired clusterboard can be located in a dummy cell between the first cluster of battery cells and the second cluster of battery cells. In a further embodiment, the dummy cell has a width such that the distance between the first cluster of battery cells and the second cluster of battery cells is sufficient that a first EMF generated in the first cluster of battery cells cancels a second EMF generated in the second cluster of battery cells.

In another embodiment, the battery module can further comprise a first set of electrical connectors connecting the respective battery cells in the first cluster of battery cells to each other to create a first electrical circuit, wherein the first electrical circuit connects the first cluster of battery cells with a first electrical flow path. In an embodiment, the first electrical flow path can be configured such that a first EMF in a first portion of the first electrical flow path cancels a second EMF created in a second portion of the first electrical flow path.

In a further embodiment, the battery module can further comprise a second set of electrical connectors connecting the respective battery cells in the second cluster of battery cells to each other to create a second electrical circuit, wherein the second electrical circuit connects the second cluster of battery cells with a second electrical flow path. In a further embodiment, the second electrical flow path can be configured such that a third EMF in the first portion of the second electrical flow path cancels a fourth EMF created in a second portion of the second electrical flow path. In a further embodiment, a fifth EMF generated by the first electrical circuit in the first set of battery cells cancels a sixth EMF generated by the second electrical circuit in the second set of battery cells.

In other embodiments, elements described in connection with the disclosed systems can be embodied in different forms such as a method. For example, in an embodiment, a method can be utilized to reduce EMF and EMI in a battery module, wherein the method comprises positioning a first clusterboard with a second clusterboard to form a pair of clusterboards, and further locating the pair of clusterboards between a first cluster of battery cells and a second cluster of battery cells, wherein pair of clusterboards, the first cluster of battery cells, and the second cluster of battery cells combine to form a battery module, the pair of clusterboards physically separate the first cluster of battery cells from the second cluster of battery cells to reduce electromagnetic interference (EMI) between the first cluster of battery cells and the second cluster of battery cells.

In an embodiment of the method, the first clusterboard can further comprise a first AC terminal and a second AC terminal, wherein the first AC terminal and second AC terminal respectively connect the first clusterboard to at least one of the second clusterboard, a third clusterboard located in a battery pack that includes the battery module, or a device electrically connected to a battery pack comprising the battery module.

In a further embodiment of the method, the first clusterboard can comprise a first DC terminal and a second DC terminal, wherein a first busbar connects the first DC terminal and a first battery cell in the first cluster of battery cells, and a second busbar connects the second DC terminal and a second battery cell in the first cluster of battery cells, wherein the respective batteries in the first cluster of battery cells are electrically connected in series.

In another embodiment of the method, the first DC terminal, the second DC terminal, and battery cells in the first cluster of battery cells can be connected by a set of busbars to form a series circuit, wherein the set of busbars includes the first busbar and the second busbar, the set of busbars are arranged such that a first portion of the series circuit is located proximate to a second portion of the series circuit and a first electromagnetic field (EMF) present in the first portion of the series circuit and a second EMF present in the second portion of the series circuit interact to mutually cancelled out the first EMF and the second EMF. In an embodiment, the first EMF present in the first portion of the series circuit is generated in response to current flow in a first direction relative to the location of the pair of clusterboards, and the second EMF present in the second portion of the series circuit is generated in response to current flow in a second direction relative to the location of the pair of clusterboards, wherein the busbars are arranged such that the first direction and second direction are opposite.

In another embodiment, a battery module can comprise a first clusterboard electrically coupled to a first cluster of battery cells; and a second clusterboard electrically coupled to a second cluster of battery cells, wherein the first clusterboard can be co-located with the second clusterboard to form a paired clusterboard, and the paired clusterboard can be located between the first cluster of battery cells and the second cluster of battery cells, wherein the battery module is configured to reduce electromagnetic interference (EMI) present in the battery module when electrical energy is flowing through the battery module. In an embodiment, the paired clusterboard can be located in a dummy cell between the first cluster of battery calls and the second cluster of battery cells.

In a further embodiment, the battery module can further comprise a first alternating current (AC) terminal, a second AC terminal, a first direct current (DC) terminal, and a second DC terminal, wherein, the first AC terminal, the second AC terminal, the first DC terminal, and the second DC terminal are connected to form a first H-bridge. In a further embodiment, the first DC terminal, the second DC terminal, and the first cluster of battery cells can be connected in series to form an electrical circuit, wherein the electrical circuit further comprises, a first connector connecting a first battery cell to a second battery cell to form a first portion of the electrical circuit; and a second connector connecting a third battery cell to a fourth battery cell to form a second portion of the electrical circuit, wherein the first portion of the electrical circuit is aligned relative to the second portion of the electrical circuit such that a first electromagnetic field (EMF) generated in the first portion of the electrical circuit is cancelled by a second EMF present in the second portion of the electrical circuit.

In another embodiment, the battery module can be located in a battery pack configured to provide AC to a device co-located with the battery pack on a vehicle, and the first EMF and the second EMF are generated when the battery pack generates the AC current.

### DESCRIPTION OF THE DRAWINGS

One or more exemplary embodiments are described below in the Detailed Description section with reference to the following drawings.
**FIG. 1A** illustrates a single clusterboard, in accordance with at least one embodiment.
**FIG. 1B** presents a single clusterboard, with a view of the clusterboard with the external casing removed, as viewed from a first side, in accordance with at least one embodiment.
**FIG. 1C** illustrates a single clusterboard, with a view of the clusterboard with the external casing removed, as viewed from a second side, in accordance with at least one embodiment.
**FIG. 2** illustrates a double/paired clusterboard configuration, in accordance with at least one embodiment.
**FIG. 3** illustrates a battery module comprising a paired clusterboard coupled to prismatic cells with a 6+6 configuration, in accordance with at least one embodiment.
**FIG. 4** illustrates a battery module comprising a paired clusterboard coupled to cylindrical cells in a 2p6s + 2p6s configuration, with a busbar configuration for low EMF layout, in accordance with at least one embodiment.
**FIG. 5** illustrates a top view of a paired clusterboard configuration with terminals identified, in accordance with at least one embodiment.
**FIG. 6** illustrates a battery pack configuration having a low EMF configuration for application with both prismatic and cylindrical cells, in accordance with at least one embodiment.
**FIG. 7** illustrates a current path in a left cluster of cells when the cells are connected with a positive current flow path arrangement, in accordance with at least one embodiment.
**FIG. 8** illustrates a current path in a left cluster of cells when the cells are connected with a negative current flow path arrangement, in accordance with at least one embodiment.
**FIG. 9** illustrates a bypass current flow path in a left cluster of cells when the cells are not connected, in a bypass configuration, in accordance with at least one embodiment.
**FIG. 10A** illustrates a battery pack, depicting a current path in a string of cell clusters, in accordance with at least one embodiment.
**FIG. 10B** illustrates a current path flowing through a string of battery clusters, in accordance with an embodiment.
**FIG. 10C** illustrates a current path flowing through a string of battery clusters comprising cylindrical cells, in accordance with an embodiment.
**FIG. 11** illustrates a configuration for a battery module to reduce EMF/EMI, in accordance with an embodiment.
**FIG. 12** illustrates a configuration for a battery module to reduce EMF/EMI, in accordance with an embodiment.
**FIG. 13** illustrates a pair of clusterboards located in a battery module to prevent EMI, in accordance with an embodiment.
**FIG. 14** illustrates a process for manufacturing a battery pack configured to mitigate EMF/EMI, according to one or more embodiments.

### DETAILED DESCRIPTION

The following detailed description is merely illustrative and is not intended to limit embodiments and/or application or uses of embodiments. Furthermore, there is no intention to be bound by any expressed and/or implied information presented in any of the preceding Background section, Summary section, and/or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

Ranges A-*n* are utilized herein to indicate a respective plurality of devices, components, statements, attributes, etc., where *n* is any positive integer.

While battery cells have conventionally been utilized in DC applications, battery cells, battery modules, battery packs, smartcells, and suchlike, are finding application in AC environments, such as providing AC power to an AC motor located on a vehicle. However, such applications can also give rise to EMF and EMI effects that can negatively affect operation of other electronic devices in sufficient proximity of the battery, as well as being regulated with regard to the health impact on a person in proximity of the battery, as well as potentially affecting lifetime and/or performance of battery cells utilized in the AC application.

Per the various embodiments presented herein, various battery cell/battery pack configurations and operation are presented, whereby the one or more embodiments address deleterious EMI and EMF effects. The various configurations presented herein utilize one or more designs/configurations such that every string/or phase in the battery cell under AC usage cancels out EMF created respectively within it and in adjacent portions/regions, e.g., EMF present in a first portion of an electrical circuit is cancelled by EMF present in a second portion of the electrical circuit, and vice-versa, thereby eliminating/reducing/negating EMI generated by the various EMFs present in a battery module/battery pack.

Per the following embodiments, a battery module (e.g., functioning as a smartcell) comprises one or more battery cells connected to, and controlled by, respective clusterboards. To avoid EMI being generated by passage of an electric current through the battery module, it is important that an EMF area present/created by an electric loop in the battery module is as small as possible. In an embodiment, a reduced area EMF can be created by utilizing a counteracting electric current, e.g., in a first busbar/first portion of a current flow path, positioned as close as possible/proximate to an electric current at a second busbar/second portion of the current flow path. In an embodiment, positioning clusterboards (e.g., a pair of clusterboards) in a dummy cell located at a center of two or more clusters of battery cells achieves minimizing the EMF.

Per the various embodiments presented herein, a battery pack system can be configured to remove large and costly parts from a conventional drivetrain and use the batteries to more efficiently power the vehicle. More particularly, a battery pack system comprises a multilevel inverter concept configured to replace driveline components such as a conventional large inverter by integrating them into printed circuit boards (PCBs) connected to clusters of battery cells. In an embodiment, utilizing PCBs/components to control operation of a battery pack enables the DC output from a small battery cluster to be converted into AC output to control an electric motor through field-oriented control (FOC). Isolated DC output from a battery pack system/clusterboards can be used for auxiliary (non-propulsive) loads such as onboard lights, infotainment, climate control, and suchlike. The battery pack can be configured in a number of different ways depending on requirements regarding propulsion, utilization by other high and low voltage electrical systems onboard the vehicle, charging, etc.

It is to be appreciated that the respective configurations presented herein are examples, and any suitable configuration can be utilized. Hence, while configurations mention 2p6s + 2p6s configurations of cylindrical cells, 6+6 cell arrangements, and suchlike, any suitable configuration can be utilized. Further, while the various embodiments presented herein are directed towards construction and utilization of battery packs on a vehicle, the various embodiments are equally applicable to battery pack being utilized in any suitable application requiring AC power supply.

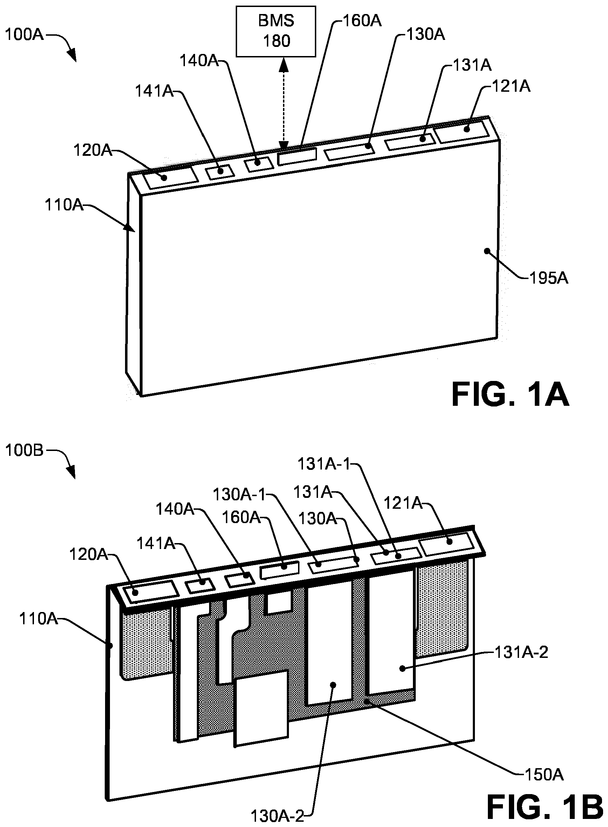

FIGS. 1A-1C, schematics 100A-C, illustrate a single clusterboard, with, and without, the casing, in accordance with an embodiment. FIGS. 1A-C present a clusterboard 110A, with and without a casing 195A, wherein clusterboard 110A is an example of a clusterboard in a collection of clusterboards *110A-n* included in a battery pack (e.g., battery pack 602A, as further described). Each clusterboard *110A-n* can comprise a pair of AC terminals 120A-n and 121A-*n*, identified here for clusterboard 110A as 120A and 121A. Each respective terminal 120A-n and 121A-n can comprise of a busbar, wherein a first end, e.g., 120A-1 functions as a terminal for connection (e.g., as an input or an output) to another clusterboard *110A-n* to form a series/string of clusterboards in a battery pack, and a second end 120A-2 of terminal 120A forms part of a H-bridge configuration, as further described. First end 121A-1 functions as a terminal of busbar 121A, and second end 121A-2 forms part of the H-bridge configuration.

Further, each clusterboard can include a pair of DC/battery terminals 130A-n and 131A-n, (e.g., battery terminals B+ and B-) identified here for clusterboard 110A as 130A and 131A. Each respective battery terminal 130A-n and 131A-n can comprise of a busbar, wherein a first end, e.g., 130A-1, functions as a terminal for connection to a first busbar (e.g., busbars 320A-n/321A-n and/or 420A-*n*/421A-*n*, as further described) of a battery cluster 310A-*n* and/or 410A-n, and a second end, e.g., 130A-2 , forms part of the H-bridge configuration, as further described. Further, wherein a first end, e.g., 131A-1, functions as a terminal for connection to a first busbar (e.g., busbars 320A-*n*/321A-*n* and/or 420A-*n*/421A-*n*) of a battery cluster 310A-*n* and/or 410A-n, and a second end, e.g., 131A-2 , forms part of the H-bridge configuration. An example H-bridge configuration at clusterboard 110A can comprise AC terminals/busbars 120A and 121A in conjunction with battery terminals/busbars 130A and 131A, a H-bridge configuration at clusterboard 110B comprises AC terminals/busbars 120B and 121B in conjunction with battery terminals/busbars 130B and 131B, a H-bridge configuration at clusterboard 110n comprises AC terminals/busbars 120*n* and 121*n* in conjunction with battery terminals/busbars 130n and 131*n*, and suchlike for each of the clusterboards 110A*-n* included in a battery pack.

Terminals 140A-*n* and 141A-*n* respectively present on clusterboards 110A-*n* are terminals for microDC isolated outputs for servicing auxiliary loads present on a vehicle, and are separate from the AC circuits of concern herein which can be used for propulsion of the vehicle.

Clusterboards 110A*-n* can respectively include a printed circuit board (PCB) 150A-n, wherein the respective PCB 150A-*n* can include a respective connector 160A-*n* enabling a clusterboard 110A*-n* to be connected/communicatively coupled to a battery management system, BMS 180. BMS 180 can be utilized to ensure safety, performance, and reliability of an electric vehicle battery system which includes battery pack 602A. For example, BMS 180 can control/monitor such functionality as battery temperature, battery voltage, and suchlike, during battery charging operations (e.g., under-charge, over-charge, battery temperature, etc.), battery operation during supplying power to a vehicle's motor, and suchlike. The PCB 150A-*n* can include a series of transistors (not shown) e.g., metal-oxide-semiconductor field-effect transistors (MOSFETs) to facilitate formation/operation of the H-bridge configuration formed by terminals 120A-*n*, 121A*-n*, 130A-*n*, and 131A-*n* as previously mentioned.

Operation of the one or more clusterboards *110A-n* can be controlled by a local controller 155A-n located on PCB 150A-*n*, e.g., in conjunction with the BMS 180, In an embodiment, clusterboards 110A-*n* can operate in 3 different respective states: positive current flow, negative current flow, and bypass, as further described, e.g., to enable operation of the battery pack 602 to provide AC power, or be recharged/energy regeneration. Local controller 155A-*n* can comprise a microprocessor, a central processing unit (CPU) coupled to memory device, or the like, a wireless communication component, e.g., a radio frequency (RF) transmitter/receiver, transceiver, or the like, and suchlike.

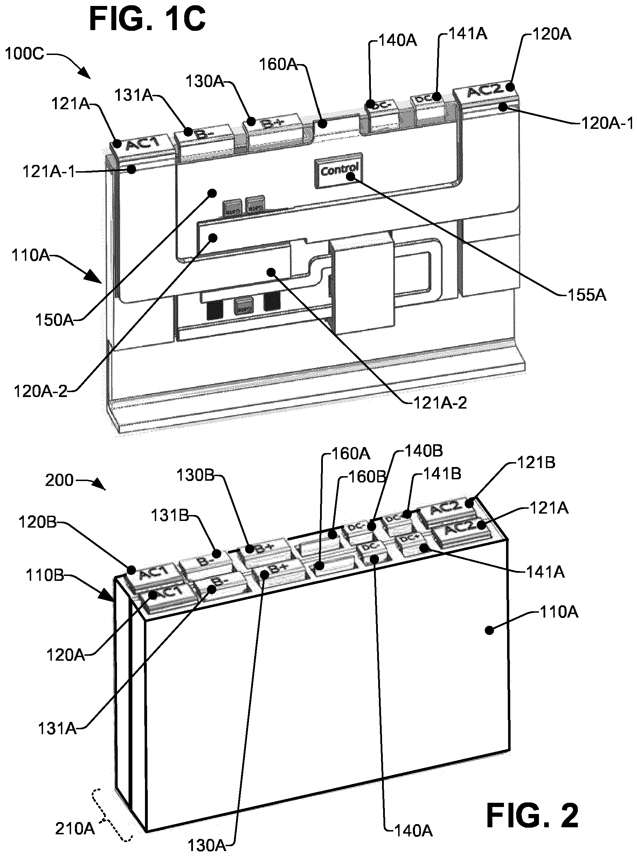

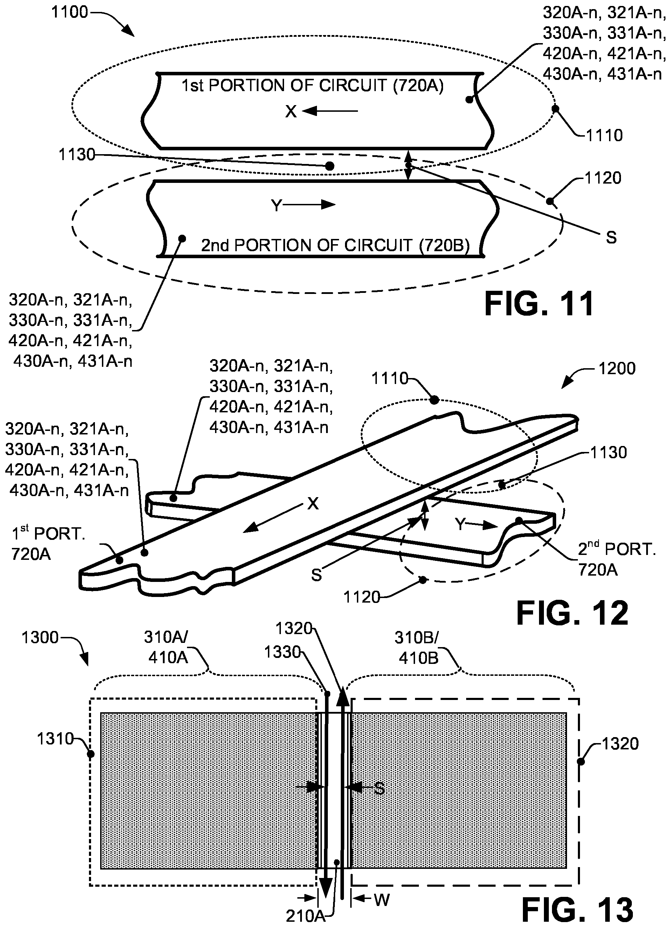

FIG. 2, schematic 200, illustrates a pair of clusterboards arranged together, in accordance with an embodiment. In an embodiment, clusterboards 110A-*n* can be combined to form a pair of clusterboards/paired clusterboards 210A-*n*. As shown in FIG. 2, a pair of clusterboards 110A and 110B are arranged to form a pair of clusterboards 210A. As further described, a respective pair of clusterboards 210A-n can be located between a pair of battery clusters 310A-*n* and 410A-*n* to enable physical separation of a respective pair of battery clusters 310A-*n* and 410A-*n*. In an embodiment, the respective pair of clusterboards 110A-*n* can be located between a pair of battery clusters 310A*-n*/410A*-n* in a dummy cell (per FIG. 13, dummy cell 1305). Effectively, a dummy cell is an open slot/structure between, for example, battery cluster 310A and battery cluster 310B.

As shown, clusterboard 110A comprises AC terminals 120A and 121A, battery +/- terminals 130A and 131A, microDC terminals 140A and 141A, and a connector 160A for PCB 150A, further clusterboard 110B comprises AC terminals 120B and 121B, battery terminals 130B and 131B, microDC terminals 140B and 141B, and a connector 160B for PCB 150B. Hence, a clusterboard 110*n* comprises AC terminals 120*n* and 121*n*, battery +/- terminals 130*n* and 131*n*, microDC terminals 140*n* and 141*n*, and a connector 160*n* for PCB 150*n*. As further described, with AC terminals 120A-*n* and 121A-*n* functioning as input/outputs, the paired clusterboards 210A-*n* can be arranged to enable formation of a string comprising battery clusters 310A-*n* and 410A-*n* separated by paired clusterboards 210A-*n*, wherein the string can comprise the respective battery clusters 310A-*n* and 410A-*n* connected in series in conjunction with the batteries forming each respective battery cluster 310A-*n* and 410A*-n.*

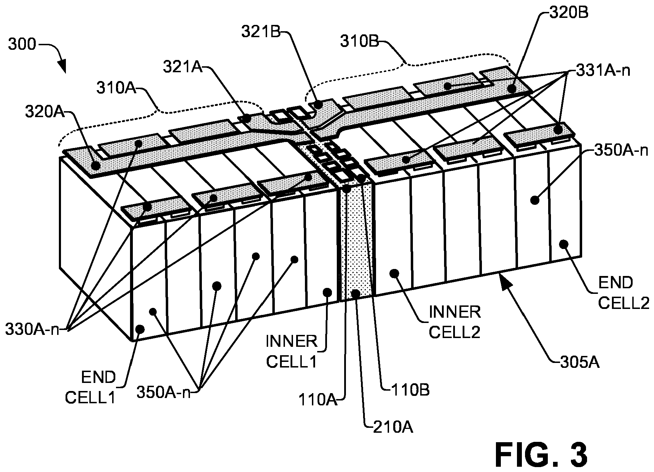

FIG. 3, schematic 300, illustrates a double cluster configuration comprising paired clusterboards with an arrangement of prismatic cells, in accordance with an embodiment. As shown in FIG. 3, a pair of clusterboards 210A is combined with a cluster/collection of prismatic battery cells 310A and 310B to form module 305A. FIG. 3 presents a 6+6 arrangement of battery cells 350A*-n,* e.g., 6 prismatic battery cells form the first battery cell cluster 310A and 6 prismatic battery cells for the second battery cell cluster 310B, however, any number of battery cells 350A-*n* can be utilized, as required to achieve an operational power requirement. The battery cells 350A-*n* in battery cluster 310A are physically separated from the battery cells 350A*-n* of battery cluster 310B by the pair of clusterboards 210.

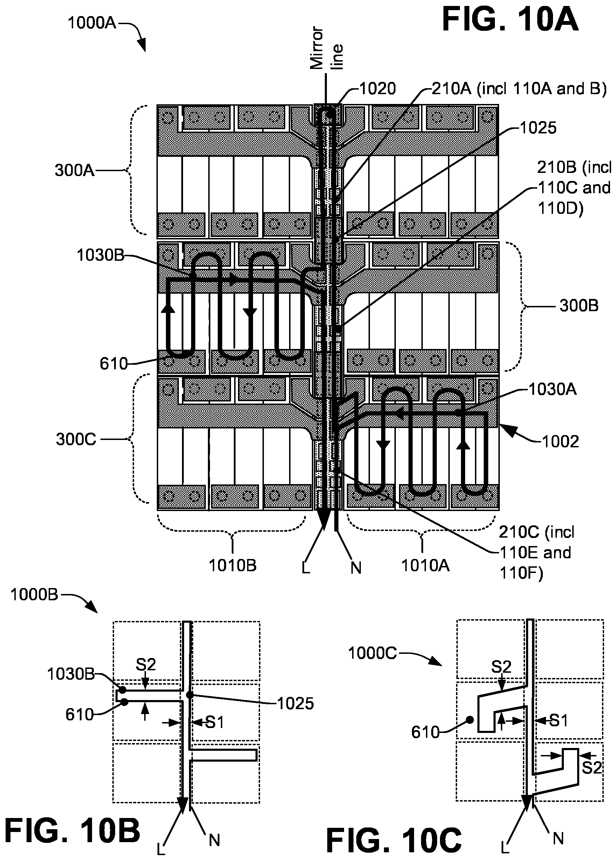

In an embodiment, in the pair of clusterboards 210, the first clusterboard 110A can be connected to/control operation of the cluster of battery cells 310A and the second clusterboard 110B can be connected to/control operation of the cluster of battery cells 310B. As further described herein, battery cells on one side of a battery pack, e.g., battery cells on side 1010A (per FIG. 10A) can be controlled by the first string of clusterboards positioned/connected to the 1010A cells, while battery cells on side 1010B can be controlled by the second string of clusterboards positioned/connected to the 1010B battery cells.

As shown the respective battery cells 350A-*n* in the battery clusters 310A-*n* are interconnected via a first series of busbars 330A-*n* (e.g., in battery cluster 310A) and a second series of busbars 331A-*n* (e.g., in battery cluster 310B). The respective busbars 330A-*n* and 331A-*n* are connected to the positive/negative terminals of respective battery cells 350A-*n* in the battery cell clusters 310A and 310B to facilitate connecting the respective cells 350A-*n* in series.

Further, a first pair of busbars 320A and 320B connect the end cells, endcell1 and endcell2, to the respective clusterboard 110A and 110B via battery terminal 130A on clusterboard 110A and battery terminal 130B on clusterboard 110B. A second pair of busbars 321A and 321B connect the inner cells, innercell1 and innercell2 to the respective clusterboard 110A and 110B via battery terminal 131A on clusterboard 110A and battery terminal 131B on clusterboard 110B.

Busbars 320A-*n*, 321A-*n*, and 330A-*n* connect the battery cells 350A-*n* to form clusters 310A-*n* and in series. Busbars 320A-*n*, 321A-*n*, and 330A*-n* (and 420A-*n*, 421A-*n*, 430A-*n*, and 431A-*n*) can be formed from any suitable conductor, e.g., copper, aluminum, gold, direct metal-to-metal component connections, wired connections, and suchlike. Battery cells 350A-*n* (and 450A-*n*) can respectively comprise any type of battery cell material, for example, in a non-limiting list, a lithium battery cell material, a lithium ion (Li-Ion) battery cell material, a lithium metal battery cell material, a lithium sulphur (Li-S) battery cell material, a molten salt (Na-*n*iCl2) battery cell material, a nickel metal hydride (Ni-MH) battery cell material, a lead acid battery cell.

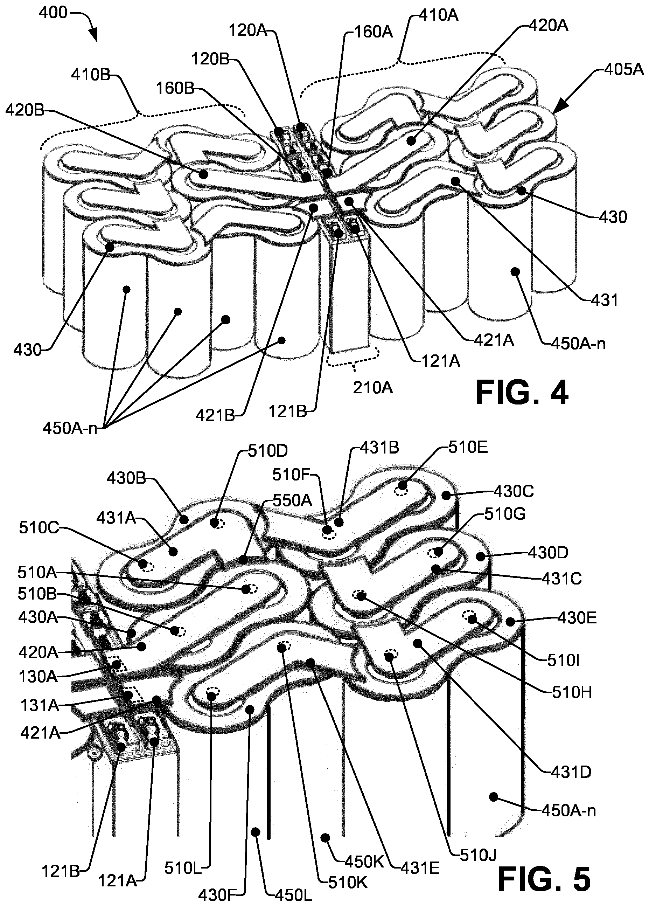

FIG. 4, schematic 400, illustrates a double cluster configuration comprising a pair of clusterboards with an arrangement of cylindrical battery cells, in accordance with an embodiment. As shown in FIG. 4, a pair of clusterboards 210A is combined with a cluster/collection of cylindrical battery cells 450A-*n* to form module 405A. FIG. 4 presents cylindrical cells 450A-*n* in a 2p6s + 2p6s configuration, a low EMF configuration, e.g., a first collection of cylindrical battery cells with a 2p6s arrangement form the first battery cell cluster 410A and a second collection of cylindrical battery cells with a 2p6s arrangement form the second battery cell cluster 410B. In the example configuration presented in FIG. 4, first battery cluster 410A comprises 12 cylindrical cells 450A-n and second battery cluster 410B also comprises 12 cylindrical cells 450A-*n*. While a 2p6s + 2p6s configuration is presented for configuration 400, any number of battery cells 450A-*n* can be utilized, as required to achieve an operational power requirement.

Similar to battery module 305A, as previously described, respective battery cells 450A-*n* in the battery clusters 410A and 410B are interconnected via busbars 420A-*n* in conjunction with being connected to the paired clusterboards 210A, whereby the battery cells 450A-*n* in battery cluster 410A are physically separated from the battery cells 450A-*n* of battery cluster 410B by the pair of clusterboards 210A.

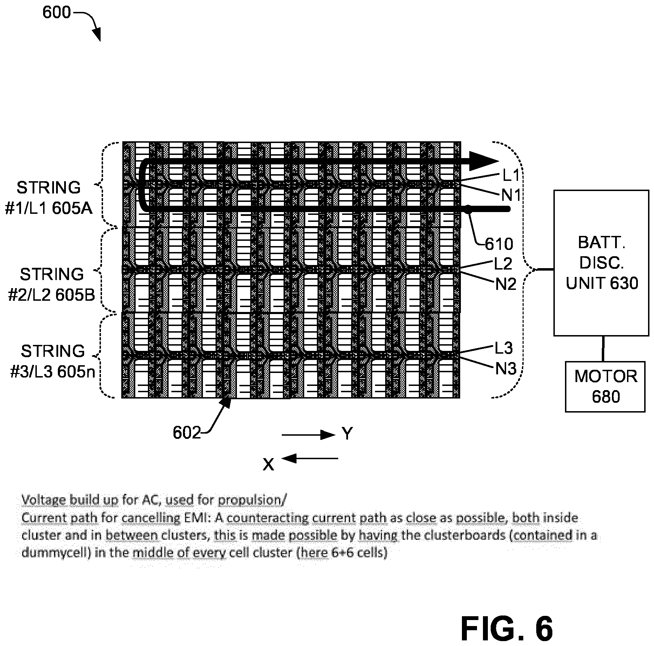

With reference to FIGS. 3 and 4, the paired clusterboards 210A sits between (e.g., in a dummy cell) a first side of battery cells and a second side of battery cells. Per FIG. 3, the paired clusterboards 210A sits between a first cluster of prismatic battery cells 310A and a second cluster of battery cells 310B. Per FIG. 4, the paired clusterboards 210A sits between a first cluster of cylindrical battery cells 410A and a second cluster of battery cells 410B. Effectively the location of the paired clusterboards 210A functions to isolate the first cluster of battery cells (e.g., clusters 310A and 410A) from the second cluster of battery cells (e.g., battery cell clusters 310B and 410B), enabling operation/functionality of the respective first cluster of battery cells to be isolated from the second cluster of battery cells. As shown in FIGS. 6 and 10, the respective clusters of battery cells can be connected via a busbar (e.g., busbar 1020 placed at an end point between a pair of clusterboards in the same battery module, or busbar 1025 connecting an AC terminal 120A/121A in a first battery module with an AC terminal 120B/121B in a second battery module to form a string of battery modules 602/1002).

FIG. 5, system 500, illustrates the respective busbars utilized to connect a series of cylindrical batteries, in accordance with an embodiment. FIG. 5 presents a zoomed image of battery cluster 410A and illustrates the respective position of busbars 420A, 421A, 430A-*n*, and 431A-*n*. The 12 cylindrical batteries 450A-*n* are connected in a 2p6s configuration (2 parallel sets of 6 batteries connected in series) with a clusterboard *110A-n.* As shown, a first busbar 420A connects battery terminal 130A (positioned underneath busbar 420A, as indicated by the hidden detail lines) with a first pair of batteries 450A/450B at terminals 510A and 510B. Further, busbar 430A connects the first pair of batteries 450A/450B to busbar 431A. Busbar 431A connects busbar 430A with terminals 510C and 510D of a second pair of batteries 450C/450D. Busbar 430B connects the second pair of batteries 450C/450D with busbar 431B, and so on, until busbar 431E connects to terminals 510K and 510L of a sixth pair of batteries 450K/450L, busbar 430F connects the sixth pair of batteries 450K/450L to busbar 421A, whereby, busbar 421A connects busbar 430F with the terminal 131A.

As shown, busbars 431A-*n* connect to the terminals 520A-*n* (e.g., positive terminals), while busbars 430A-*n* connect to the respective cell can of the respective batteries 450A-*n*, where the cell can is the outer container of the battery 450A-*n* and configured as the negative terminal. Busbars 420A-*n* do not touch/connect to the busbars 430A-*n* while busbars 421A-*n* and 431A*-n* connect busbars 430A-*n* at a single connection point, e.g., at the stepped connection 550A, such that the busbars 420A-*n*, 421A-*n*, and 431A-*n* are located above the underlying busbars 430A-*n*.

FIG. 6, system 600, illustrates a battery pack configuration, in accordance with at least one embodiment. System 600 presents a low EMF configuration for application with both prismatic and cylindrical cells. As shown in FIG. 6, system 600 depicts a battery pack 602 comprising 3 strings of cells, strings 605A, 605B, and 605C. The respective neutral wires (N1-*n*) and live/hot wires (L1-*n*) are depicted, whereby the N-wires can convey current back from an electrical device (e.g., electric motor 680) to the power source (e.g., battery pack 602) and the L-wires can convey the current from the power source to the electrical device.

As further shown, the three strings of cells 605A-*n* can be connected to a battery disconnect unit 630 and a motor 680, whereby the battery disconnect unit 630 can be configured to disconnect/isolate battery pack 602 in the event of a problematic operation.

In an embodiment, the respective cells/batteries can be configured to create a current path 610A (e.g., a first current path 610A in a series of current paths 610A-n) that cancels electromagnetic interference (EMI) across an entire battery pack 602. In a further embodiment, by utilizing adjacent current paths 610A-*n* (e.g., a first portion of a circuit, second portion of a circuit, etc.) to effectively be flowing in opposite directions, EMI effects can be mitigated/minimized/eradicated. While not shown, current paths can also be present in cell strings 605B and 605C functioning to mitigate EMI within the strings of cells and further in adjacent strings, such that a current path 610A in string 605A can also function to cancel EMFs and EMI from an adjacent string 605B (e.g., current path 610B). To facilitate mitigation of EMI/EMF the current paths 610A-*n* should be set up as close/adjacent to as possible to each other, both within a cluster of batteries (e.g., cluster of battery cells 310A*-n*/410A*-n*) and also between adjacent clusters of batteries (e.g., in respective strings 605A-*n*). As shown in FIG 6, current path 610A initially flows in a first/forward direction *X* and subsequently in a second/reverse direction *Y* (e.g., between respective neutral wire inputs N1-*n* and respective live wire outputs L1*-n*)*,* wherein the current path 610A in the first direction *X* cancels EMI effects in the second direction *Y* of the current path 610A. The effect of the current path 610A is enabled by locating the clusterboards 210A-*n* in the middle of every cell cluster (whereby, FIG. 6 depicts a 6+6 cells arrangement). Hence, returning to FIGS. 3 and 4, paired clusterboards 210A are located in the middle of a first cluster of prismatic battery cells 310A/410A and a second cluster of prismatic battery cells 310B/410B. The separated portions of current path 610 is further described with reference to FIGS. 10A and 10B.

Any number of strings of cells 605A-n can be utilized, e.g., in an embodiment, the three strings 605A-C presented in FIG. 6, can be utilized to generate a 3-phase current from the battery pack 602 (e.g., without use of an inverter). For example, 3 phase currents used to drive one or more motors can comprise Phase A string = string 605A, Phase B string = string 605B, and Phase C string = string 605C.

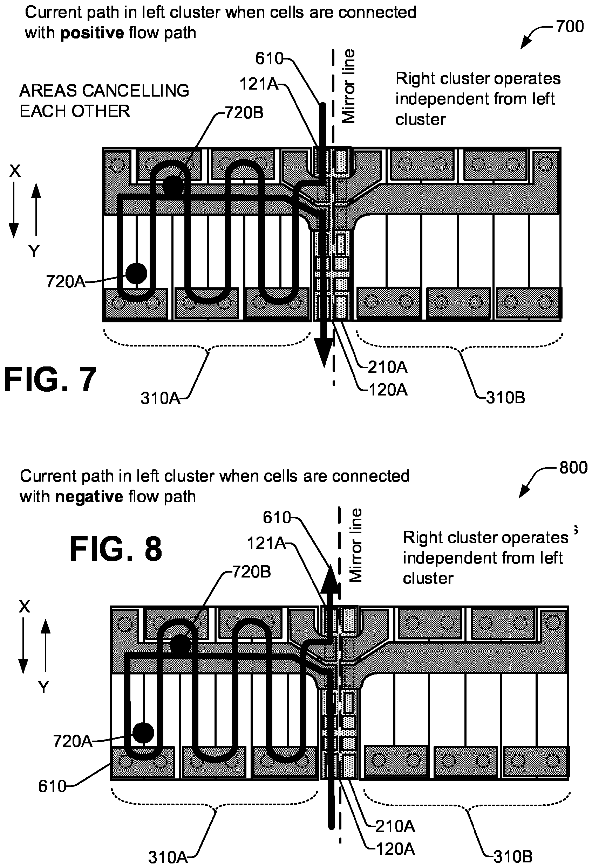

FIG. 7, system 700, illustrates a current path in a left cluster of cells when the cells are connected with a positive current flow arrangement, in accordance with an embodiment. FIG. 7 depicts a current path 610 passing through the batteries in the left cluster 310A, with the right cluster 310B operating independent of the left cluster 310A. As shown, the current flow path 610 is from terminal 121A (input), through the battery cell cluster 310A, to 120A (output). Battery cells 350A-*n* and busbars 320A, 321A, and 330A-*n* in the left cluster 310A are arranged/configured to enable the current path 610 to operate in a snakelike/series manner such that a first portion of the current path is flowing in a first direction *X* and a second portion of the current path is flowing in a second direction *Y*, wherein the first portion of the current path and the second portion of the current path are adjacent. As further shown in FIG. 7, first electromagnetic effects arising at a first region 720A of the collection of cells 310A are cancelled out by second electromagnetic effects arising at a second region 720B of the collection of cells 310A. In an example of operation, motor 680 may be operating at a low level of power such that only energy from the battery cells 350A-*n* in battery cluster 310A are required with the batteries 350A-*n* in battery cluster 310B being in a bypass/de-coupled state.

FIG. 8, system 800, illustrates a current path in a left cluster of cells when the cells are connected with a negative current flow arrangement, in accordance with an embodiment. FIG. 8 depicts a current path 610 passing through the batteries in the left cluster 310A, with the right cluster 310B operating independent of the left cluster 310A. As shown, the current flow path 610 is from AC terminal 120A (input), through the battery cell cluster 310A, to AC terminal 121A (output). Battery cells 350A-n and busbars 320A, 321A, and 330A-n in the left cluster 310A are arranged/configured to enable the current path 610 to operate in a snakelike/series manner such that a first portion of the current path is flowing in a first direction *X* and a second portion of the current path is flowing in a second direction *Y*, wherein the first portion of the current path and the second portion of the current path are adjacent. As further shown in FIG. 8, first electromagnetic effects arising at a first region 720A of the collection of cells 310A are cancelled out by second electromagnetic effects arising at a second region 720B of the collection of cells 310A. In an example of operation, motor 680 may be operating at a low level of power such that only energy from the battery cells 350A-*n* in battery cluster 310A are required with the batteries 350A-*n* in battery cluster 310B being in a bypass/de-coupled state.

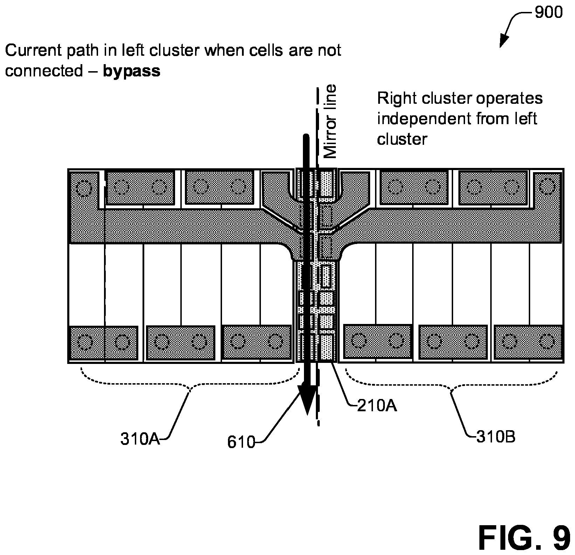

FIG. 9, system 900, illustrates a current path in a left cluster of cells when the cells are not connected, in a bypass configuration, in accordance with an embodiment. During a bypass operation, the current flow/path is confined to flow directly between the AC terminals 120A and 121A, hence, per FIG. 1C, the current flow connects AC terminal 120A with AC terminal 121A, with no current flow/path occurring in the left cluster 310A with battery terminals/busbars 130-A1 and 130-A2 disconnected/de-coupled from the AC terminals/busbars 120A and 121A. As shown, current path 610 flows through the clusterboard 110A of the paired clusterboards 210A, with the right cluster 310B isolated from the left cluster 310A by the paired clusterboards 210A.

Accordingly, per the foregoing, FIGS. 7-9 illustrate the current path 610 when respective configurations are applied to the clusterboard 110A, with current path 610 of FIG. 7 generated with a positive configuration of operation at clusterboard 110A, current path 610 of FIG. 8 generated with a negative configuration of operation at clusterboard 110A, a current path 610 of FIG. 9 generated with a bypass configuration of operation at clusterboard 110A. The respective configuration present/implemented at a clusterboard/cell cluster can be an effect of how the particular cell cluster is being utilized, e.g., energy demand by motor 680 is low, and hence, a few cell clusters are being utilized with the majority of cell clusters in bypass mode, while under high energy demand, e.g., the vehicle is accelerating with high energy draw at motor 680, the majority/all of the cell clusters are undergoing positive current flow and/or negative current flow. Further, implementation of a particular cluster of cells at a particular time can be a function of load balancing across the battery pack to enable even discharge/charging of respective cell clusters. As previously mentioned, adjustment of operation of the battery pack 602A-*n* and respective battery cell clusters 310A*-n*/410A*-n,* can be controlled by BMS 180 and/or controller 155A-*n*. As shown in FIGS. 7-9, clusters 310A and 310B can function independently about the mirror line, while the configuration on the left side, cluster 310A, mirrors the configuration on the right side, cluster 310B.

FIG. 10A, illustrates a battery pack 1000A, depicting a current path in a string of cell clusters, in accordance with at least one embodiment. FIG. 10A illustrates a current path 610 created in a string of cell clusters included in battery pack 1002. Battery pack 1002 comprises a string of clusters connected in a sequence of interconnected battery modules 305A, 305B, 305C, a first string comprises a right side cluster 1010A formed from the battery clusters on the right side of the series of paired clusterboards 210, and a second string comprises a left side cluster 1010B formed from the battery clusters on the left side of the series of paired clusterboards 210, e.g., paired clusterboards 210A connected to paired clusterboards 210B, further connected to paired clusterboards 210C, whereby, as mentioned earlier, the right side cluster 1010A is operating independently from the left side cluster 1010B and separated by the series of clusterboards 210A-*n*. As shown, a first portion 1030A of current path 610 is created in the right side cluster 1010A and a second portion 1030B of current path 610 is created in the left side cluster 1010B. The first portion 1030A of current path 610 connects with the second portion 1030B of current path 610 via the busbar/interconnect/connector/terminal 1020 located in the top battery module 305A, and intermediate busbars 1025 connecting adjacent AC terminals 120A-*n* and 121A-*n*. As shown in FIG. 10A, apart from the current path 610 passing through the interconnect 1020, the first portion 1030A of the current path 610 is confined to the right side cluster 1010A and the second portion 1030B of the current path 610 is confined to the left side cluster 1010B.

The first portion of current path 610 passes through the right side 1010A of module 305C per the negative configuration of FIG. 8, passes through the right side 1010A of module 305B per the bypass configuration presented in FIG. 9, and further passes through the right side 1010A of module 305A per the bypass configuration of FIG. 9. At connector 1020, the second portion 1030B of current path 610 reverses the direction of the first portion 1030A of the current path 610, the second portion of current path 610 passes through the left side 1010B of battery pack 1002, e.g., fourth cluster in module 305A per the bypass configuration of FIG. 9, passes through the left side 1010B of the fifth cluster 1030B per the positive configuration of FIG. 7, and then passes through the left side 1010B of the sixth cluster in module 305C in a bypass configuration of FIG. 9.

In the example operating scenario presented in FIG. 10A regarding the 6 battery clusters, the power requirements placed on battery pack 1002 (e.g., by motor 680) only require energy from 2 clusters of batteries (clusters at 1030A and 1030B), while the other 4 clusters of batteries are in bypass mode. Voltage build up generated by the battery pack configurations 602 and 1002, for example, generates alternating current (AC) which can be utilized for propulsion of a vehicle on which the one or more battery systems presented herein in FIGS. 1A-10 can be located.

FIG. 10B, schematic 1000B, illustrates a current path flowing through a string of battery clusters comprising rectangular cells, in accordance with an embodiment. FIG. 10B illustrates the current path 610 presented in FIG. 10A being configured such that a distance *S* between respective portions of the current path 610 is arranged to be at a distance that facilitates cancelling of respective EMFs in the configuration 1000A, as further described with reference to FIGS 11 and 12. Distance *S1* indicates a separation of respective portions of current path 610 between the respective clusterboards 110A-*n* in the respective pairs of clusterboards 210A-*n*. Distance *S2* indicates a separation of respective portions of current path 610 within a battery cluster 310A*-n.*

FIG. 10C, schematic 1000C, illustrates a current path flowing through a string of battery clusters comprising cylindrical cells, in accordance with an embodiment. FIG. 10C follows the convention presented in FIG. 10B with a current path 610 representing the current path present when utilizing cylindrical cells, e.g., as previously described with regard to FIGS. 4 and 5. As shown, the current path 610 has a snake-like configuration resulting from the current path constructed for the cylindrical cells 450A-*n* connected with the busbars 430A-*n* and 431A*n*. While having a different configuration than the square/rectangular profile presented in FIG. 10B, the current path 610 is configured such that respective portions of the current path are separated by a distance S to enable cancelling of respective EMFs in the configurations 400 and 500, as further described with reference to FIGS 11 and 12. Distance *S1* indicates a separation of respective portions of current path 610 between the respective clusterboards *110A-n* in the respective pairs of clusterboards 210A-*n*. Distance *S2* indicates a separation of respective portions of current path 610 within a battery cluster 410A*-n.*

FIGS. 11 and 12 further illustrate respective busbar configurations to minimize/eliminate EMF and EMI. FIG. 11, schematic 1100 illustrates a configuration for a battery module to reduce EMF/EMI, in accordance with an embodiment. As shown, a first portion 720A of a first busbar (e.g., busbar 320A in busbars 320A-*n*, 321A*-n*, 330A*-n,* 331A*-n,* 420A-*n*, 421A-*n*, 430A-*n*, 431A-*n,* etc.) is presented proximate/adjacent to a second portion 720B of a second busbar (e.g., busbar 330A in busbars 320A-*n*, 321A-*n*, 330A*-n,* 331A-*n*, 420A*n*, 421A-*n*, 430A-*n*, 431A-*n*, etc.). Current flow, in direction *X* through the first busbar causes a first EMF 1110 to be generated and the current flow in direction *Y* through the second busbar causes second EMF 1120 to be generated. Even though the first busbar and the second busbar are located in the same circuit (e.g., connecting batteries in a battery module 305A-*n*, 405A-*n*), the first busbar and second busbar are respectively aligned/positioned such that the first EMF 1110 cancels out the second EMF 1120 at region 1130, thereby reducing the EMI present at region 1130. In an embodiment, the respective busbars can be positioned in accordance with a distance *S*, wherein *S* is the distance that facilitates cancelling of respective EMFs 1110 and 1120 to mitigate EMI in region 1130.

FIG. 12, schematic 1200 illustrates a configuration for a battery module to reduce EMF/EMI, in accordance with an embodiment. As shown, a first portion of a first busbar (e.g., busbar 431C in busbars 320A-*n*, 321A-*n*, 330A-*n*, 331A-*n*, 420A*-n*, 421A-*n*, 430A-*n*, 431A-*n*, etc.) is presented in conjunction with a second portion of a second busbar (e.g., busbar 430D in busbars 320A-*n*, 321A-*n*, 330A-*n*, 331A-*n*, 420A-*n*, 421A-*n*, 430A-*n*, 431A-*n*, etc.). Current flow, in direction *X* through the first busbar causes a first EMF 1110 to be generated and the current flow in direction *Y* through the second busbar causes second EMF 1120 to be generated. Even though the first busbar (e.g., busbar 431C) and the second busbar (e.g., busbar 430D are located in the same circuit (e.g., connecting batteries in a module 305A-*n*, 405A-*n*), the first busbar and second busbar are respectively aligned/positioned such that the first EMF 1110 cancels out the second EMF 1120 at region 1130, thereby reducing the EMI present at region 1130. Distance S between respective busbars can be in accordance of mitigating EMI in region 1130.

FIG. 13, schematic 1300, illustrates a pair of clusterboards located in a battery module to prevent EMI, in accordance with an embodiment. As shown, and previously mentioned, a pair of clusterboards 210A-*n* can be located between a first cluster of batteries 310A/410A and a second cluster of batteries 310B/410B. The pair of clusterboards 210A can be located in a dummy cell 1305, which is effectively a slot/space between the first cluster of batteries 310A/410A and the second cluster of batteries 310B/410B. The combination of the dummy cell 1305 and the pair of clusterboards 210A cause a separation between the first cluster of batteries 310A/410A and the second cluster of batteries 310B/410B, wherein the separation can have a width *W. W* is of sufficient width/distance such that a first EMF 1310 generated at the first cluster of batteries 310A/410A does not interact with a second EMF 1320 generated at the second cluster of batteries 310B/410B. As previously described, per the various embodiments presented herein, the first EMF 1310 and/or the second EMF 1320, if present, may be of minimal magnitude owing to the respective EMF cancellation being engendered at each of the first cluster of batteries 310A/410A and the second cluster of batteries 310B/410B. Portions 1320 and 1330 of the current path 610 incorporated into to the respective clusterboards 110A-*n* (e.g., between terminals 120A-*n* and 121A-*n*) in the pairs of clusterboards 210A-n, as shown and as previously mentioned, are configured with a separation of S to enable cancelling of EMF effects present in those respective portions 1320 and 1330.

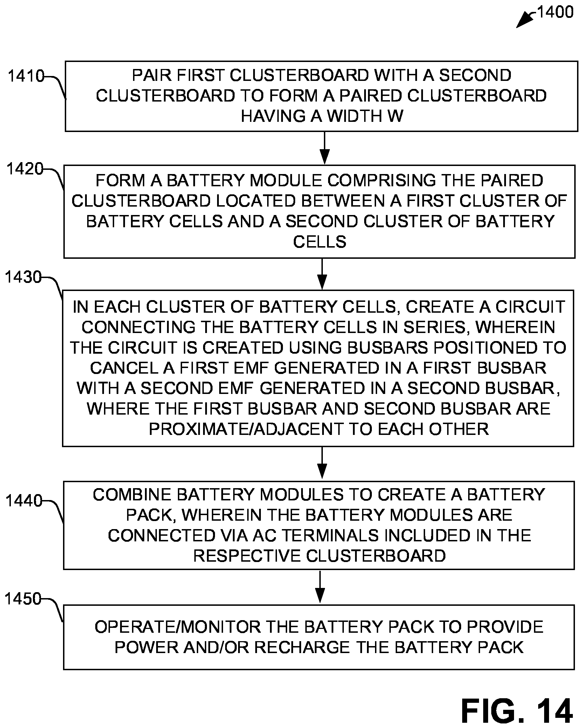

FIG. 14, process 1400, presents a configuration to reduce/eliminate EMI in a battery pack, in accordance with one or more embodiments.

As previously described, by utilizing a combination of clusterboard placement and busbar design and location, electromagnetic fields generated during operation of the battery pack can be utilized against each other to reduce associated EMI effects.

At 1410, a first clusterboard (e.g., first clusterboard 110A) can be paired with a second clusterboard (e.g., a second clusterboard 110B) to form a pair of clusterboards (e.g., paired clusterboards/pair of clusterboards 210A), whereby the pair of clusterboards have a width W.

At 1420, the pair of clusterboards can be incorporated into a battery module (e.g., battery module 305A-*n*/405A-*n*) comprising clusters of battery cells, wherein the battery module can be further included in a battery pack (e.g., battery pack 602/1002). The pair of clusterboards can be located between a first cluster of battery cells (e.g., first cluster of batteries 310A/410A) and a second cluster of battery cells (e.g., second cluster of batteries 310B/410B), wherein the pair of clusterboards, the first cluster of battery cells, and the second cluster of battery cells combine to form a battery module. Given the central/middle positioning of the pair of clusterboards, the pair of clusterboards physically separate (e.g., by distance *W*) the first cluster of battery cells from the second cluster of battery cells, thereby reducing EMI between the first cluster of battery cells and the second cluster of battery cells. The pair of clusterboards separate the respective first cluster of battery cells from the second cluster of battery cells such that any EMF effects present in the first cluster of battery cells are sufficiently distanced from EMF effects present in the second cluster of battery cells to prevent any EMI effects from being generated.

At 1430, the first DC terminal, the second DC terminal, and battery cells (e.g., battery 350A-*n*, 450A-*n*) in the first cluster of battery cells can be connected by a set of busbars (e.g., busbars 320A-*n*, 321A*-n*, 420A-*n*, 421A-*n*) to form a series circuit. The set of busbars are respectively arranged such that a first portion (e.g., portion 720A) of the series circuit can be located proximate to a second portion (e.g., portion 720B) of the series circuit and a first EMF (e.g., EMF 1110A-*n*) present in the first portion of the series circuit and a second EMF (e.g., EMF 1120A-n) present in the second portion of the series circuit interact to mutually cancel out the first EMF and the second EMF. In an embodiment, the respective busbars in the set of busbars can be arranged such that a first direction of current flow (e.g., direction *X*) in the first portion of the series circuit generates the first EMF in a first direction relative to the location of the pair of clusterboards and a second direction of current flow (e.g., direction *Y*) in the second portion of the series circuit generates a second EMF in a second direction relative to the location of the pair of clusterboards. In a further embodiment, the first EMF and the second EMF can be cancelled by each other, thereby negating the presence of EMI generated during operation of the battery module/battery pack in an AC implementation.

At 1440, as previously mentioned, the first clusterboard can include a first AC terminal (e.g., first AC terminal 120A) and a second AC terminal (e.g., second AC terminal 121A-*n*), wherein the first AC terminal and second AC terminal can respectively connect the first clusterboard to at least one of the second clusterboard, a third clusterboard located in another battery module in the battery pack, or a device electrically connected to the battery module/battery pack, such as a motor (e.g., motor 680), a battery disconnect unit (e.g., battery disconnect unit 630), a battery regeneration unit, a battery charging unit, a low voltage electrical system, a high voltage electrical system, and suchlike, e.g., co-located on a vehicle with the battery module/battery pack and powered by/controlling operation of the battery module/battery pack. By connecting the respective battery modules together (e.g., via the AC terminals) the battery modules can be combined to form the battery pack.

At 1450, operation of any of the first clusterboard, second clusterboard, battery cells, battery modules, battery pack, and suchlike, can be monitored and controlled by any of a controller 155A-*n*, a BMS (e.g., BMS 180), battery disconnect unit (e.g., battery disconnect unit 630), or other system configured to control operation and interaction of the respective clusterboards, modules, battery packs, and suchlike, in providing power to an onboard device, a motor (e.g., motor 680) or suchlike, and also charging of the respective modules.

The description of illustrated embodiments of the subject disclosure as provided herein, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as one skilled in the art can recognize. In this regard, while the subject matter has been described herein in connection with various embodiments and corresponding drawings, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

While not an exhaustive listing, the following provides an overview of various embodiments, but not all embodiments, presented herein:
Clause 1: A battery module, comprising: a first cluster of battery cells, wherein the first cluster of battery cells are electrically coupled together; a second cluster of battery cells, wherein the second cluster of battery cells are electrically coupled together; a first clusterboard electrically coupled to the first cluster of battery cells; and a second clusterboard electrically coupled to the second cluster of battery cells, wherein the first clusterboard is co-located with the second clusterboard to form a paired clusterboard, and the paired clusterboard is located between the first cluster of battery cells and the second cluster of battery cells, wherein the battery module is configured to reduce an electromagnetic field (EMF) present in the battery module when electrical energy is flowing through the battery module..
Clause 2: The battery module of any preceding clause, wherein the battery module is located onboard an electric vehicle and configured to provide energy to a motor located on the electric vehicle.
Clause 3: The battery module of any preceding clause, wherein the paired clusterboard is located in a dummy cell between the first cluster of battery cells and the second cluster of battery cells.
Clause 4: The battery module of any preceding clause, wherein the dummy cell has a width such that the distance between the first cluster of battery cells and the second cluster of battery cells is sufficient that a first EMF generated in the first cluster of battery cells cancels a second EMF generated in the second cluster of battery cells.
Clause 5: The battery module of any preceding clause, wherein the first cluster of battery cells and the second cluster of battery cells comprise at least one of prismatic batteries or cylindrical batteries.
Clause 6: The battery module of any preceding clause, further comprising a first set of electrical connectors connecting the respective battery cells in the first cluster of battery cells to each other to create a first electrical circuit, wherein the first electrical circuit connects the first cluster of battery cells with a first electrical flow path.
Clause 7: The battery module of any preceding clause, wherein the first electrical flow path is configured such that a first EMF in a first portion of the first electrical flow path cancels a second EMF created in a second portion of the first electrical flow path.
Clause 8: The battery module of any preceding clause, further comprising a second set of electrical connectors connecting the respective battery cells in the second cluster of battery cells to each other to create a second electrical circuit, wherein the second electrical circuit connects the second cluster of battery cells with a second electrical flow path.
Clause 9: The battery module of any preceding clause, wherein the second electrical flow path is configured such that a third EMF in the first portion of the second electrical flow path cancels a fourth EMF created in a second portion of the second electrical flow path.
Clause 10: The battery module of any preceding clause, wherein a fifth EMF generated by the first electrical circuit in the first set of battery cells cancels a sixth EMF generated by the second electrical circuit in the second set of battery cells.
Clause 11: The battery module of any preceding clause, wherein the EMF is generated when the battery module is utilized with an alternating current (AC) operation.
Clause 12: A method, comprising: positioning a first clusterboard with a second clusterboard to form a pair of clusterboards; and locating the pair of clusterboards between a first cluster of battery cells and a second cluster of battery cells, wherein pair of clusterboards, the first cluster of battery cells, and the second cluster of battery cells combine to form a battery module, the pair of clusterboards physically separate the first cluster of battery cells from the second cluster of battery cells to reduce electromagnetic interference (EMI) between the first cluster of battery cells and the second cluster of battery cells.
Clause 13: The method of any preceding clause, wherein the first clusterboard comprises a first AC terminal and a second AC terminal, wherein the first AC terminal and second AC terminal respectively connect the first clusterboard to at least one of the second clusterboard, a third clusterboard located in a battery pack that includes the battery module, or a device electrically connected to a battery pack comprising the battery module.
Clause 14: The method of any preceding clause, wherein the first clusterboard comprises a first DC terminal and a second DC terminal, wherein a first busbar connects the first DC terminal and a first battery cell in the first cluster of battery cells, and a second busbar connects the second DC terminal and a second battery cell in the first cluster of battery cells, wherein the respective batteries in the first cluster of battery cells are electrically connected in series.
Clause 15: The method of any preceding clause, wherein the first DC terminal, the second DC terminal, and battery cells in the first cluster of battery cells are connected by a set of busbars to form a series circuit, wherein the set of busbars includes the first busbar and the second busbar, the set of busbars are arranged such that a first portion of the series circuit is located proximate to a second portion of the series circuit and a first electromagnetic field (EMF) present in the first portion of the series circuit and a second EMF present in the second portion of the series circuit interact to mutually cancelled out the first EMF and the second EMF.
Clause 16: The method of any preceding clause, the first EMF present in the first portion of the series circuit is generated in response to current flow in a first direction relative to the location of the pair of clusterboards, and the second EMF present in the second portion of the series circuit is generated in response to current flow in a second direction relative to the location of the pair of clusterboards, wherein the busbars are arranged such that the first direction and second direction are opposite.
Clause 17: A battery module comprising: a first clusterboard electrically coupled to a first cluster of battery cells; and a second clusterboard electrically coupled to a second cluster of battery cells, wherein the first clusterboard is co-located with the second clusterboard to form a paired clusterboard, and the paired clusterboard is located between the first cluster of battery cells and the second cluster of battery cells, wherein the battery module is configured to reduce electromagnetic interference (EMI) present in the battery module when electrical energy is flowing through the battery module.
Clause 18: The battery module of any preceding clause, wherein: the first clusterboard comprises a first alternating current (AC) terminal, a second AC terminal, a first direct current (DC) terminal, and a second DC terminal, wherein: the first AC terminal, the second AC terminal, the first DC terminal, and the second DC terminal are connected to form a first H-bridge; the first DC terminal, the second DC terminal, and the first cluster of battery cells are connected in series to form an electrical circuit, wherein the electrical circuit further comprises: a first connector connecting a first battery cell to a second battery cell to form a first portion of the electrical circuit; and a second connector connecting a third battery cell to a fourth battery cell to form a second portion of the electrical circuit, wherein the first portion of the electrical circuit is aligned relative to the second portion of the electrical circuit such that a first electromagnetic field (EMF) generated in the first portion of the electrical circuit is cancelled by a second EMF present in the second portion of the electrical circuit.
Clause 19: The battery module of any preceding clause, wherein battery module is located in a battery pack configured to provide AC to a device co-located with the battery pack on a vehicle, and the first EMF and the second EMF are generated when the battery pack generates the AC current.
Clause 20: The battery module of any preceding clause, wherein the paired clusterboard is located in a dummy cell between the first cluster of battery calls and the second cluster of battery cells.

In various cases, any suitable combination of clauses 1-11 can be implemented.

In various cases, any suitable combination of clauses 12-16 can be implemented.

In various cases, any suitable combination of clauses 17-20 can be implemented.

## Claims

1. A battery module, comprising:
a first cluster of battery cells, wherein the first cluster of battery cells are electrically coupled together;
a second cluster of battery cells, wherein the second cluster of battery cells are electrically coupled together;
a first clusterboard electrically coupled to the first cluster of battery cells; and
a second clusterboard electrically coupled to the second cluster of battery cells, wherein the first clusterboard is co-located with the second clusterboard to form a paired clusterboard, and the paired clusterboard is located between the first cluster of battery cells and the second cluster of battery cells, wherein the battery module is configured to reduce an electromagnetic field (EMF) present in the battery module when electrical energy is flowing through the battery module.

2. The battery module of claim 1, wherein the battery module is located onboard an electric vehicle and configured to provide energy to a motor located on the electric vehicle.

3. The battery module of claim 1, wherein the paired clusterboard is located in a dummy cell between the first cluster of battery cells and the second cluster of battery cells, and wherein preferably the dummy cell has a width such that the distance between the first cluster of battery cells and the second cluster of battery cells is sufficient that a first EMF generated in the first cluster of battery cells cancels a second EMF generated in the second cluster of battery cells.

4. The battery module of claim 1, wherein the first cluster of battery cells and the second cluster of battery cells comprise at least one of prismatic batteries or cylindrical batteries.

5. The battery module of claim 1, further comprising a first set of electrical connectors connecting the respective battery cells in the first cluster of battery cells to each other to create a first electrical circuit, wherein the first electrical circuit connects the first cluster of battery cells with a first electrical flow path, and wherein preferably the first electrical flow path is configured such that a first EMF in a first portion of the first electrical flow path cancels a second EMF created in a second portion of the first electrical flow path.

6. The battery module of claim 5, further comprising a second set of electrical connectors connecting the respective battery cells in the second cluster of battery cells to each other to create a second electrical circuit, wherein the second electrical circuit connects the second cluster of battery cells with a second electrical flow path.

7. The battery module of claim 6, wherein the second electrical flow path is configured such that a third EMF in the first portion of the second electrical flow path cancels a fourth EMF created in a second portion of the second electrical flow path, and wherein preferably a fifth EMF generated by the first electrical circuit in the first set of battery cells cancels a sixth EMF generated by the second electrical circuit in the second set of battery cells.

8. The battery module of claim 1, wherein the EMF is generated when the battery module is utilized with an alternating current (AC) operation.

9. A method, comprising:
positioning a first clusterboard with a second clusterboard to form a pair of clusterboards; and
locating the pair of clusterboards between a first cluster of battery cells and a second cluster of battery cells, wherein pair of clusterboards, the first cluster of battery cells, and the second cluster of battery cells combine to form a battery module, the pair of clusterboards physically separate the first cluster of battery cells from the second cluster of battery cells to reduce electromagnetic interference (EMI) between the first cluster of battery cells and the second cluster of battery cells.

10. The method of claim 9, wherein the first clusterboard comprises a first AC terminal and a second AC terminal, wherein the first AC terminal and second AC terminal respectively connect the first clusterboard to at least one of the second clusterboard, a third clusterboard located in a battery pack that includes the battery module, or a device electrically connected to a battery pack comprising the battery module.

11. The method of claim 10, wherein the first clusterboard comprises a first DC terminal and a second DC terminal, wherein a first busbar connects the first DC terminal and a first battery cell in the first cluster of battery cells, and a second busbar connects the second DC terminal and a second battery cell in the first cluster of battery cells, wherein the respective batteries in the first cluster of battery cells are electrically connected in series.

12. The method of claim 11, wherein the first DC terminal, the second DC terminal, and battery cells in the first cluster of battery cells are connected by a set of busbars to form a series circuit, wherein the set of busbars includes the first busbar and the second busbar, the set of busbars are arranged such that a first portion of the series circuit is located proximate to a second portion of the series circuit and a first electromagnetic field (EMF) present in the first portion of the series circuit and a second EMF present in the second portion of the series circuit interact to mutually cancelled out the first EMF and the second EMF.

13. The method of claim 12, the first EMF present in the first portion of the series circuit is generated in response to current flow in a first direction relative to the location of the pair of clusterboards, and the second EMF present in the second portion of the series circuit is generated in response to current flow in a second direction relative to the location of the pair of clusterboards, wherein the busbars are arranged such that the first direction and second direction are opposite.

14. A battery module comprising:
a first clusterboard electrically coupled to a first cluster of battery cells; and
a second clusterboard electrically coupled to a second cluster of battery cells, wherein the first clusterboard is co-located with the second clusterboard to form a paired clusterboard, and the paired clusterboard is located between the first cluster of battery cells and the second cluster of battery cells, wherein the battery module is configured to reduce electromagnetic interference (EMI) present in the battery module when electrical energy is flowing through the battery module.

15. The battery module of claim 14, wherein:
the first clusterboard comprises a first alternating current (AC) terminal, a second AC terminal, a first direct current (DC) terminal, and a second DC terminal, wherein:
the first AC terminal, the second AC terminal, the first DC terminal, and the second DC terminal are connected to form a first H-bridge;
the first DC terminal, the second DC terminal, and the first cluster of battery cells are connected in series to form an electrical circuit, wherein the electrical circuit further comprises:
a first connector connecting a first battery cell to a second battery cell to form a first portion of the electrical circuit; and
a second connector connecting a third battery cell to a fourth battery cell to form a second portion of the electrical circuit, wherein the first portion of the electrical circuit is aligned relative to the second portion of the electrical circuit such that a first electromagnetic field (EMF) generated in the first portion of the electrical circuit is cancelled by
a second EMF present in the second portion of the electrical circuit, wherein preferably the battery module is located in a battery pack configured to provide AC to a device co-located with the battery pack on a vehicle, and the first EMF and the second EMF are generated when the battery pack generates the AC current.
